# EUROPEAN PATENT APPLICATION

(11) **EP 4 625 908 A1**
(43) Date of publication of application: **01.10.2025**
(21) Application number: 22968101.0
(22) Date of filing: 13.12.2022
(51) Int. Cl.: H04L 27/00

(54) **SERVICE CALLING METHOD, COMMUNICATION APPARATUS, SERVICE CALLING SYSTEM, AND VEHICLE**

(71) Applicant: Shenzhen Yinwang Intelligent Technologies Co., Ltd., Shenzhen, Guangdong 518110 (CN)
(72) Inventor: HONG, Jiaqi, Shenzhen, Guangdong 518129 (CN); WANG, Chenyu, Shenzhen, Guangdong 518129 (CN); WEI, Zhuo, Shenzhen, Guangdong 518129 (CN); ZHANG, Li, Shenzhen, Guangdong 518129 (CN)
(74) Representative: Gill Jennings & Every LLP
(86) International application number: PCT/CN2022/138522
(87) International publication number: WO 2024/124387

(57) **Abstract**

This application provides a service invoking method and system, a communication apparatus, and a vehicle. **In** the method, a service invoker sends a first control command, together with first behavior information as verification information of the first control command, to a service provider, so that the service provider can determine, based on the first behavior information, that the first control command is triggered by behavior of a user instead of being forged by an attacker. Therefore, validity check is performed on the first control command based on the first behavior information, to help improve security of invoking a vehicle body control service.

## Description

### TECHNICAL FIELD

This application relates to the security field, and in particular, to a service invoking method and system, a communication apparatus, and a vehicle.

### BACKGROUND

With rapid development of intelligent vehicles, vehicle software is increasingly diversified. A user may issue a control command (for example, a vehicle body control command like unlocking a vehicle door, opening a vehicle window, adjusting a seat back, or turning on an air conditioner) by using vehicle software in a service invoker (for example, an intelligent cockpit) of the intelligent vehicle. After a service provider (for example, a vehicle domain controller) in the intelligent vehicle receives the control command, the service provider first verifies whether the control command is from the service invoker. If the service provider determines that the control command is from the service invoker, the service provider determines that the control command is valid, and sends the control command to an execution device corresponding to the control command, so that the execution device executes the control command.

Currently, a service provider in the conventional technology identifies and performs verification on a control command based on identification information (for example, an identity document (identity document, ID)) of a service application. Specifically, each service provided by an intelligent vehicle has a vehicle-level global ID. When the service provider (for example, a vehicle domain controller) receives a control command from a service invoker (for example, an intelligent cockpit), the service provider determines, based on a service ID carried in the control command and an access control strategy based on the service ID, whether the control command is valid, to determine whether to send the control command to an execution device.

However, when the service invoker is hacked, the service ID is easily obtained or forged. Therefore, authentication performed only based on the service ID cannot ensure security of service invoking on the vehicle. A solution that can ensure secure service invoking is an urgent problem to be resolved.

### SUMMARY

This application provides a service invoking method and system, a communication apparatus, and a vehicle, to improve security of service invoking.

According to a first aspect, this application provides a service invoking method. The service invoking method may be performed by a service provider, or may be performed by a component (for example, a component like a processor, a chip, or a chip system) in the service provider. For example, the service provider may be a vehicle domain controller (also referred to as vehicle domain control (vehicle domain control, VDC) or vehicle domain control), may be a telematics box (Telematics Box, T-Box) in a vehicle, or may be a combination of a T-Box and a vehicle domain controller. In the method, a service provider receives a first control command and verification information of the first control command from a service invoker. The first control command is used to invoke a first service, and the verification information of the first control command is used to perform verification on the first control command. In addition, the verification information of the first control command includes first behavior information, and the first behavior information indicates behavior of a user in triggering generation of the first control command. Then, the service provider performs verification on the first control command based on the verification information of the first control command, and if the verification on the first control command succeeds, the service provider sends the first control command to an execution device, where the execution device is configured to execute the first control command.

In this implementation, the verification information that is received by the service provider and that is used to perform verification on the first control command includes the first behavior information, and the first behavior information indicates the behavior of the user in triggering the generation of the first control command. The service provider can determine, based on the first behavior information, that the first control command is triggered by the behavior of the user instead of being forged by an attacker. Therefore, validity check is performed on the first control command based on the first behavior information, to help improve security of invoking a vehicle body control service.

In a possible implementation, that the service provider performs verification on the first control command based on the verification information of the first control command includes: The service provider determines, based on the first behavior information and a first mapping rule, a second control command corresponding to the first behavior information, where the first mapping rule includes at least one type of behavior information and a control command corresponding to each type of behavior information; and if the first control command is the same as the second control command, the service provider determines that the verification on the first control command succeeds.

In this implementation, the verification information that is received by the service provider and that is used to perform verification on the first control command includes the first behavior information, and the service provider can find the second control command in the first mapping rule based on the first behavior information. When the service provider determines that the first control command is the same as the second control command determined based on the first behavior information, the service provider determines that the first control command is triggered by the user and is not tampered with, and triggers sending of the first control command to the execution device. Therefore, this helps improve the security of invoking the vehicle body control service.

In a possible implementation, the verification information of the first control command further includes first execution flow information, the first execution flow information indicates process information for invoking the first service, and the first mapping rule further includes execution flow information for invoking each service. In this case, the service provider needs to compare the control command corresponding to the first behavior information, and also needs to compare the execution flow information of the service corresponding to the control command. Specifically, if the first control command is the same as the second control command, the service provider determines, based on the second control command and the first mapping rule, second execution flow information corresponding to the second control command; and if the first execution flow information is the same as the second execution flow information, the service provider determines that the verification on the first control command succeeds.

Optionally, the first execution flow information is an execution flow for invoking the first service or a hash value of an execution flow for invoking the first service. The execution flow for invoking the service is a set of instructions or jump instructions executed by the service invoker in a process of generating the control command based on the behavior information. Therefore, the execution flow for invoking the service can reflect integrity of the service invoking process. If tampering behavior of an attacker occurs in the service invoking process, the execution flow collected by the service invoker should include instructions that reflect the tampering behavior. Therefore, the execution flow that is for invoking the service and that is executed during generation of the control command triggered by the user is different from an execution flow that is for invoking a service and that is subject to tampering of an attacker. Therefore, the execution flow for invoking the service is used as the verification information of the control command. This helps the service provider identify whether there is an attack, and helps improve security of the service invoking process.

In a possible implementation, the first behavior information includes first coordinates, the first coordinates are coordinates corresponding to an operation of the user, and each of the at least one type of behavior information in the first mapping rule includes at least one coordinate area. That the service provider determines, based on the first behavior information and the first mapping rule, the second control command corresponding to the first behavior information includes: The service provider determines a coordinate area in which the first coordinates are located, and the service provider determines, according to the first mapping rule, that a control command corresponding to the coordinate area in which the first coordinates are located is the second control command.

For example, if the user enters an instruction on a touchscreen, the first behavior information includes the first coordinates, and the first coordinates are coordinates corresponding to the operation of the user on the touchscreen. It should be noted that the first coordinates may be coordinate values of a tap position on the touchscreen. For example, the user can trigger the generation of the first control command by tapping only one key on the touchscreen. In addition, the first coordinates may alternatively be coordinate values of several tap positions on the touchscreen. For example, the user can trigger the generation of the first control command only by continuously tapping several keys on the touchscreen. In addition, the first coordinates may alternatively be a continuous coordinate range. For example, the user continuously slides on the touchscreen to make a specific sliding gesture (for example, a finger slides to left on the touchscreen or a finger slides to right on the touchscreen), and the specific gesture can trigger the generation of the first control command. In actual application, other behavior of the user may alternatively enable the service invoker to detect one or more coordinates.

In this implementation, the coordinates corresponding to the operation of the user are used as the first behavior information. The coordinates are generated only when the user performs the operation on the touchscreen. Therefore, use of the coordinates as the first behavior information can reflect the behavior of the user. This helps the service provider determine, based on the coordinates, that the first control command is triggered by the behavior of the user instead of being forged by the attacker, and further helps improve the security of invoking the vehicle body control service.

In a possible implementation, the first behavior information includes first semantic information, the first semantic information is semantics generated based on a voice instruction input by the user, and each of the at least one type of behavior information in the first mapping rule includes one piece of semantic information; and that the service provider determines, based on the first behavior information and the first mapping rule, the second control command corresponding to the first behavior information includes: The service provider determines, according to the first mapping rule, that a control command corresponding to the first semantic information is the second control command.

In this implementation, the first semantic information obtained by converting the voice instruction sent by the user is used as the first behavior information. The first semantic information is generated only when the user sends the voice instruction to a microphone. Therefore, use of the first semantic information as the first behavior information can reflect the behavior of the user. This helps the service provider determine, based on the first semantic information, that the first control command is triggered by the behavior of the user instead of being forged by the attacker, and further helps improve the security of invoking the vehicle body control service.

In a possible implementation, the first behavior information includes first time information, and the first time information is time at which the service invoker detects the behavior of the user in triggering the generation of the first control command. For example, if the first behavior information includes the first coordinates, first time indicated by the first time information is time at which the user taps the coordinates on the touchscreen. For another example, if the first behavior information includes the first semantic information, the first time indicated by the first time information is time at which the service invoker detects the voice instruction. Specifically, if the service provider determines that a difference between a moment indicated by the first time information and a current moment exceeds the first threshold, the service provider determines that the verification on the first control command fails.

In this implementation, the service provider determines, based on the first time information, whether the first control command is a replay attack. This helps identify the replay attack, and helps improve the security of the service invoking process.

In a possible implementation, the verification information of the first control command is signed by the service invoker. Before the service provider determines, based on the first behavior information and the first mapping rule, the second control command corresponding to the first behavior information, the method further includes: The service provider performs verification on a signature of the verification information of the first control command. If the verification performed by the service provider on the signature of the verification information of the first control command succeeds, the service provider determines, based on the first behavior information and the first mapping rule, the second control command corresponding to the first behavior information; or if the verification performed by the service provider on the signature of the verification information of the first control command fails, the service provider determines that the verification on the first control command fails.

In this implementation, if the verification information of the first control command has the signature, the service provider needs to verify whether the signature of the verification information of the first control command is from the service invoker. In a signature verification process, the service provider can identify whether the verification information of the first control command is verification information signed by the service invoker. This helps improve the security of the service invoking process.

In a possible implementation, the method further includes: If the first control command is different from the second control command, the service provider determines that the verification on the first control command fails.

In this implementation, when the first control command is different from the second control command determined according to the first mapping rule and based on the first behavior information, it indicates that the first control command does not match the first behavior information, and it is further determined that the verification on the first control command fails, that is, the first control command is not a valid command. Therefore, this helps the service provider identify a forged control command, and further helps improve the security of the service invoking process.

In a possible implementation, the method further includes: If the first execution flow information is different from the second execution flow information, the service provider determines that the verification on the first control command fails.

In this implementation, when the first execution flow information is different from the second execution flow information determined based on the first mapping rule and the first control command, it indicates that the first execution flow information does not match the first control command, and forged or tampered execution flow information is identified. In this case, the service provider determines that the verification on the first control command fails. Therefore, this helps the service provider identify the forged control command, and further helps improve the security of the service invoking process.

In a possible implementation, the method further includes: If the service provider determines that the verification on the first control command fails, the service provider prompts the user with alarm information, where the alarm information indicates that the verification on the first control command fails; or if the service provider determines that the verification on the first control command fails, the service provider sends alarm information to the service invoker, where the service invoker is used to prompt the user with the alarm information.

In this implementation, when the verification on the first control command fails, the service provider further directly or indirectly prompts the user with the alarm information. This helps the user quickly perceive an exception, provides a reference for driving decision-making of the user, and improves driving experience of the user.

In a possible implementation, the first execution flow information is obtained by a trusted module in the service invoker.

The trusted module is a processing module whose permission is higher than that of an operating system (namely, a kernel), that is, the permission of the trusted module in the service invoker is higher than the permission of the kernel in the service invoker. It may also be understood that permission of a running environment of the trusted module is higher than permission of a running environment of the kernel. Because the permission of the trusted module is higher than the permission of the kernel, it is not easy for the attacker to crack the trusted module and tamper with data in the trusted module. Therefore, compared with a solution in the conventional technology in which the first behavior information is obtained by the kernel, a solution in which the first behavior information is obtained by the trusted module can make the first behavior information less prone to be stolen or tampered with. This improves accuracy and security of the first behavior information obtained by the service invoker.

According to a second aspect, this application provides a service invoking method. The service invoking method may be performed by a service invoker, or may be performed by a component (for example, a component like a processor, a chip, or a chip system) in the service invoker. For example, the service invoker may be an intelligent cockpit or an intelligent terminal device (for example, a smartphone, a smart watch, or another intelligent wearable device). In the method, a service invoker obtains first behavior information, where the first behavior information indicates behavior of a user in triggering generation of a first control command; the service invoker generates the first control command based on the first behavior information, where the first control command is used to invoke a first service; and the service invoker sends the first control command and verification information of the first control command, where the verification information of the first control command includes the first behavior information, and the verification information of the first control command is used to perform verification on the first control command.

In this implementation, the service invoker sends the first control command, together with the first behavior information as the verification information of the first control command, to a service provider, so that the service provider can determine, based on the first behavior information, that the first control command is triggered by the behavior of the user instead of being forged by an attacker. Therefore, validity check is performed on the first control command based on the first behavior information, to help improve security of invoking a vehicle body control service.

In a possible implementation, that the service invoker obtains the first behavior information includes: A trusted module in the service invoker obtains the first behavior information. The trusted module is a processing module whose permission is higher than that of an operating system (namely, a kernel), that is, the permission of the trusted module in the service invoker is higher than the permission of the kernel in the service invoker. It may also be understood that permission of a running environment of the trusted module is higher than permission of a running environment of the kernel. Because the permission of the trusted module is higher than the permission of the kernel, it is not easy for the attacker to crack the trusted module and tamper with data in the trusted module. Therefore, compared with a solution in the conventional technology in which the first behavior information is obtained by the kernel, a solution in which the first behavior information is obtained by the trusted module can make the first behavior information less prone to be stolen or tampered with. This improves accuracy and security of the first behavior information obtained by the service invoker.

In a possible implementation, a running environment of the trusted module and a running environment of the kernel are independent of each other. When the kernel is attacked by an attacker, the trusted module is not affected. Therefore, even if data in the kernel is subject to tampering of the attacker, data in the trusted module is not affected, and the data in the trusted module is still accurate and secure.

In a possible implementation, the trusted module has read permission and write permission on a storage module, the kernel has no access permission on the storage module, and the storage module is configured to store the first behavior information. The storage module includes a register and/or a memory. Because the kernel in the conventional technology has read permission and/or write permission on the storage module, the data in the kernel in the conventional technology is prone to be attacked and tampered with. The kernel in the service invoker in this application is configured to have no access permission on the storage module. Therefore, the attacker can be prevented from stealing or tampering with data in the storage module by using the kernel. In addition, the trusted module in the service invoker in this application is configured to have the read permission and the write permission on the storage module. The permission of the trusted module is essentially higher than the permission of the kernel and is less prone to be cracked by the attacker compared with the kernel. Therefore, this can ensure the accuracy and the security of the first behavior information obtained by the trusted module.

In a possible implementation, before the service invoker sends the first control command and the verification information of the first control command to the service provider, the method further includes: The service invoker obtains first execution flow information, where the first execution flow information indicates process information for invoking the first service.

Optionally, the first execution flow information is an execution flow for invoking the first service or a hash value of an execution flow for invoking the first service. The execution flow for invoking the service is a set of instructions or jump instructions executed by the service invoker in a process of generating the control command based on the behavior information. Therefore, the execution flow for invoking the service can reflect integrity of the service invoking process. If tampering behavior of an attacker occurs in the service invoking process, the execution flow collected by the service invoker should include instructions that reflect the tampering behavior. Therefore, the execution flow that is for invoking the service and that is executed during generation of the control command triggered by the user is different from an execution flow that is for invoking a service and that is subject to tampering of an attacker. Therefore, the execution flow for invoking the service is used as the verification information of the control command. This helps the service provider identify whether there is an attack, and helps improve security of the service invoking process.

In a possible implementation, that the service invoker obtains the first execution flow information includes: The trusted module in the service invoker obtains the first execution flow information.

In this implementation, because the first execution flow information is obtained by the trusted module in the service invoker, it can be ensured that the first execution flow information used as the verification information is secure and reliable. In addition, the first execution flow information is information that is inevitably generated when the service invoker generates the first control command based on the first behavior information. Therefore, use of the first execution flow information as one of the verification information can ensure that the first control command is triggered by the user instead of being forged by the attacker. Therefore, use of the first execution flow information and the first behavior information as the verification information of the first control command helps improve security and reliability of the vehicle body control service.

In a possible implementation, the verification information of the first control command is signed by the service invoker by using a key; and before the service invoker sends the first control command and the verification information of the first control command to the service provider, the method further includes: The service invoker performs signature processing on the verification information of the first control command by using the key.

In this implementation, signature processing is performed on the verification information of the first control command. This helps increase difficulty in forging the verification information of the first control command by the attacker, and further helps improve the security of the service invoking process.

In a possible implementation, the first behavior information includes first coordinates, and the first coordinates are coordinates corresponding to an operation of the user; or the first behavior information includes first semantic information, and the first semantic information is semantics generated based on a voice instruction input by the user.

In this implementation, the coordinates corresponding to the operation of the user are used as the first behavior information. The coordinates are generated only when the user performs the operation on a touchscreen. Therefore, use of the coordinates as the first behavior information can reflect the behavior of the user. This helps the service provider determine, based on the coordinates, that the first control command is triggered by the behavior of the user instead of being forged by the attacker, and further helps improve the security of invoking the vehicle body control service.

In a possible implementation, the first behavior information includes first time information, and the first time information is time at which the service invoker detects the behavior of the user in triggering the generation of the first control command. For example, if the first behavior information includes the first coordinates, first time indicated by the first time information is time at which the user taps the coordinates on the touchscreen. For another example, if the first behavior information includes the first semantic information, the first time indicated by the first time information is time at which the service invoker detects the voice instruction.

In this implementation, the first semantic information obtained by converting the voice instruction sent by the user is used as the first behavior information. The first semantic information is generated only when the user sends the voice instruction to a microphone. Therefore, use of the first semantic information as the first behavior information can reflect the behavior of the user. This helps the service provider determine, based on the first semantic information, that the first control command is triggered by the behavior of the user instead of being forged by the attacker, and further helps improve the security of invoking the vehicle body control service.

In a possible implementation, the trusted module includes at least one of the following: a virtual machine monitor, a trusted kernel, or a trusted execution environment TEE.

In this implementation, a plurality of specific implementations of the trusted module are provided. This helps improve diversity of specific implementation of the trusted module.

It should be noted that specific implementations and beneficial effect of this aspect are similar to some implementations of the first aspect. For details, refer to the specific implementations and the beneficial effect of the first aspect. Details are not described herein again.

According to a third aspect, this application provides a communication apparatus. The communication apparatus may be a service provider, or may be a component (for example, a component like a processor, a chip, or a chip system) in the service provider. The communication apparatus includes a transceiver module and a processing module. The transceiver module is configured to receive a first control command and verification information of the first control command from a service invoker, where the first control command is used to invoke a first service, the verification information of the first control command is used to perform verification on the first control command, the verification information of the first control command includes first behavior information, and the first behavior information indicates behavior of a user in triggering generation of the first control command. The processing module is configured to: perform verification on the first control command based on the verification information of the first control command; and if the verification on the first control command succeeds, control the transceiver module to send the first control command to an execution device, where the execution device is configured to execute the first control command.

In a possible implementation, the processing module is specifically configured to: determine, based on the first behavior information and a first mapping rule, a second control command corresponding to the first behavior information, where the first mapping rule includes at least one type of behavior information and a control command corresponding to each type of behavior information; and if the first control command is the same as the second control command, determine that the verification on the first control command succeeds.

In a possible implementation, the verification information of the first control command further includes first execution flow information, the first execution flow information indicates process information for invoking the first service, and the first mapping rule further includes execution flow information of each service.

The processing module is specifically configured to: if the first control command is the same as the second control command, determine, based on the second control command and the first mapping rule, second execution flow information corresponding to the second control command; and if the first execution flow information is the same as the second execution flow information, determine that the verification on the first control command succeeds.

Optionally, the first execution flow information is an execution flow for invoking the first service or a hash value of an execution flow for invoking the first service.

In a possible implementation, the first behavior information includes first coordinates, the first coordinates are coordinates corresponding to an operation of the user, and each of the at least one type of behavior information in the first mapping rule includes at least one coordinate area. The processing module is specifically configured to: determine a coordinate area in which the first coordinates are located; and determine, according to the first mapping rule, that a control command corresponding to the coordinate area in which the first coordinates are located is the second control command.

In a possible implementation, the first behavior information includes first semantic information, the first semantic information is semantics generated based on a voice instruction input by the user, and each of the at least one type of behavior information in the first mapping rule includes one piece of semantic information. The processing module is specifically configured to determine, according to the first mapping rule, that a control command corresponding to the first semantic information is the second control command.

In a possible implementation, the first behavior information includes first time information, and the first time information is time at which the service invoker detects the behavior of the user in triggering the generation of the first control command. The processing module is specifically configured to: if the service provider determines that a difference between a moment indicated by the first time information and a current moment exceeds the first threshold, determine that the verification on the first control command fails.

In a possible implementation, the verification information of the first control command is signed by the service invoker. The processing module is further configured to: perform verification on a signature of the verification information of the first control command; and if the verification on the signature of the verification information of the first control command succeeds, determine, based on the first behavior information and the first mapping rule, the second control command corresponding to the first behavior information.

In a possible implementation, the processing module is further configured to: if the verification performed by the service provider on the signature of the verification information of the first control command fails, determine that the verification on the first control command fails.

In a possible implementation, the processing module is further configured to: if the first control command is different from the second control command, determine that the verification on the first control command fails.

In a possible implementation, the processing module is further configured to: if the first execution flow information is different from the second execution flow information, determine that the verification on the first control command fails.

In a possible implementation, the processing module is further configured to: if it is determined that the verification on the first control command fails, control the input/output module to prompt the user with alarm information, where the alarm information indicates that the verification on the first control command fails; or the processing module is further configured to: if it is determined that the verification on the first control command fails, control the transceiver module to send alarm information to the service invoker, where the service invoker is used to prompt the user with the alarm information.

In a possible implementation, the first execution flow information is obtained by a trusted module in the service invoker.

It should be noted that specific implementations and beneficial effect of this aspect are similar to some implementations of the first aspect. For details, refer to the specific implementations and the beneficial effect of the first aspect. Details are not described herein again.

According to a fourth aspect, this application provides a communication apparatus. The communication apparatus may be a service invoker, or may be a component (for example, a component like a processor, a chip, or a chip system) in the service invoker. The communication apparatus includes a transceiver module and a processing module. The processing module is configured to: obtain first behavior information, where the first behavior information indicates behavior of a user in triggering generation of a first control command; and generate the first control command based on the first behavior information, where the first control command is used to invoke a first service. The transceiver module is configured to send the first control command and verification information of the first control command, where the verification information of the first control command includes the first behavior information, and the verification information of the first control command is used to perform verification on the first control command.

In a possible implementation, the processing module includes a trusted module. The trusted module in the communication apparatus obtains the first behavior information, where permission of the trusted module is higher than permission of a kernel in the service invoker.

Optionally, a running environment of the trusted module and a running environment of the kernel are independent of each other.

Optionally, the trusted module has read permission and write permission on a storage module, the kernel has no access permission on the storage module, and the storage module is configured to store the first behavior information.

In a possible implementation, the processing module is further configured to obtain first execution flow information, where the first execution flow information indicates process information for invoking the first service. Optionally, the first execution flow information is an execution flow for invoking the first service or a hash value of an execution flow for invoking the first service.

In a possible implementation, the trusted module in the communication apparatus obtains the first execution flow information.

In a possible implementation, the verification information of the first control command is signed by the service invoker. The processing module is further configured to perform signature processing on the verification information of the first control command by using a key.

In a possible implementation, the first behavior information includes first coordinates, and the first coordinates are coordinates corresponding to an operation of the user; or the first behavior information includes first semantic information, and the first semantic information is semantics generated based on a voice instruction input by the user.

In a possible implementation, the first behavior information includes first time information, and the first time information is time at which the service invoker detects the behavior of the user in triggering the generation of the first control command.

In a possible implementation, the trusted module includes at least one of the following: a virtual machine monitor, a trusted kernel, or a trusted execution environment TEE.

It should be noted that specific implementations and beneficial effect of this aspect are similar to some implementations of the second aspect. For details, refer to the specific implementations and the beneficial effect of the second aspect. Details are not described herein again.

According to a fifth aspect, an embodiment of this application provides a communication apparatus. The communication apparatus may be the service provider in the foregoing implementations, or may be a chip in the service provider. The communication apparatus may include a processing module and a transceiver module. When the communication apparatus is the service provider, the processing module may be a processor, and the transceiver module may be a transceiver. The service provider may further include a storage module, and the storage module may be a storage. The storage module is configured to store instructions, and the processing module executes the instructions stored in the storage module, to enable the service provider to perform the method according to the first aspect or any implementation of the first aspect. When the communication apparatus is the chip in the service provider, the processing module may be a processor, and the transceiver module may be an input/output interface, a pin, a circuit, or the like. The processing module executes instructions stored in a storage module, to enable the service provider to perform the method according to the first aspect or any implementation of the first aspect. The storage module may be a storage module (for example, a register or a cache) in the chip, or may be a storage module (for example, a read-only memory or a random access memory) that is in the service provider and that is located outside the chip.

According to a sixth aspect, an embodiment of this application provides a communication apparatus. The communication apparatus may be the service invoker in the foregoing implementations, or may be a chip in the service invoker. The communication apparatus may include a processing module and a transceiver module. When the communication apparatus is the service invoker, the processing module may be a processor, and the transceiver module may be a transceiver. The service invoker may further include a storage module, and the storage module may be a storage. The storage module is configured to store instructions, and the processing module executes the instructions stored in the storage module, to enable the service invoker to perform the method according to the second aspect or any implementation of the second aspect. When the communication apparatus is the chip in the service invoker, the processing module may be a processor, and the transceiver module may be an input/output interface, a pin, a circuit, or the like. The processing module executes instructions stored in a storage module, to enable the service invoker to perform the method according to the second aspect or any implementation of the second aspect. The storage module may be a storage module (for example, a register or a cache) in the chip, or may be a storage module (for example, a read-only memory or a random access memory) that is in the service invoker and that is located outside the chip.

According to a seventh aspect, this application provides a communication apparatus. The apparatus may be an integrated circuit chip. The integrated circuit chip includes a processor. The processor is coupled to a storage. The storage is configured to store a program or instructions. When the program or the instructions are executed by the processor, the communication apparatus is enabled to perform the method according to any implementation of the foregoing aspects.

According to an eighth aspect, an embodiment of this application provides a computer program product including instructions. When the computer program product runs on a computer, the computer is enabled to perform the method according to any implementation of the foregoing aspects.

According to a ninth aspect, an embodiment of this application provides a computer-readable storage medium including instructions. When the instructions are run on a computer, the computer is enabled to perform the method according to any implementation of the foregoing aspects.

According to a tenth aspect, an embodiment of this application provides a service invoking system. The service invoking system includes the service provider that performs the first aspect and any implementation of the first aspect; or the service invoking system includes the service invoker that performs the second aspect and any implementation of the second aspect.

According to an eleventh aspect, an embodiment of this application provides a vehicle. The vehicle includes the service provider that performs the first aspect and any implementation of the first aspect; or the vehicle includes the service invoker that performs the second aspect and any implementation of the second aspect.

### BRIEF DESCRIPTION OF DRAWINGS

To describe technical solutions in embodiments of this application more clearly, the following briefly describes accompanying drawings used in describing embodiments. It is clear that the accompanying drawings in the following descriptions show merely some embodiments of this application.
FIG. 1A is a diagram of a system architecture to which a service invoking method is applicable according to this application;
FIG. 1B is a diagram of a system architecture to which a service invoking method is applicable according to this application;
FIG. 1C is an example diagram of a processor architecture to which a service invoking method is applicable according to this application;
FIG. 1D is another example diagram of a processor architecture to which a service invoking method is applicable according to this application;
FIG. 2A and FIG. 2B are a flowchart of a service invoking method according to this application;
FIG. 3A and FIG. 3B are another flowchart of a service invoking method according to this application; and
FIG. 4 is a diagram of an embodiment of a communication apparatus according to this application.

### DESCRIPTION OF EMBODIMENTS

The following clearly and completely describes technical solutions in embodiments of this application with reference to accompanying drawings in embodiments of this application. It is clear that the described embodiments are merely some but not all of embodiments of this application.

In the specification, claims, and accompanying drawings of this application, terms "first", "second", "third", "fourth", and so on (if any) are intended to distinguish between similar objects but do not necessarily indicate a specific order or sequence. It should be understood that the terms used in such a way are interchangeable in proper circumstances, so that embodiments described herein can be implemented in an order other than the order illustrated or described herein. In addition, terms "include", "have" and any other variants are intended to cover non-exclusive inclusion. For example, a process, method, system, product, or device that includes a list of steps or units is not necessarily limited to those expressly listed steps or units, but may include other steps or units not expressly listed or inherent to such a process, method, product, or device.

It should be understood that a term "and/or" in this specification describes only an association relationship between associated objects and indicates that three relationships may exist. For example, A and/or B may indicate the following three cases: Only A exists, both A and B exist, and only B exists. In addition, a character "/" in this specification usually indicates an "or" relationship between the associated objects.

For ease of understanding, the following first describes a system architecture and an application scenario to which the service invoking method in this application is applicable.

The service invoking method provided in this application is mainly applied to a scenario in which a user triggers generation of a control command to invoke a service in a vehicle. For example, the user inputs a control command by using software or hardware of the vehicle, to invoke a service corresponding to the control command.

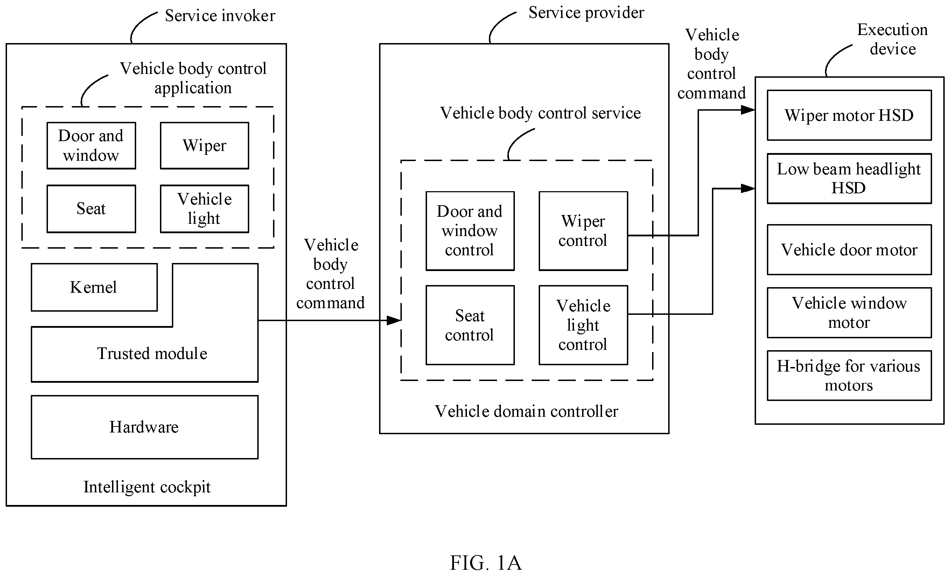

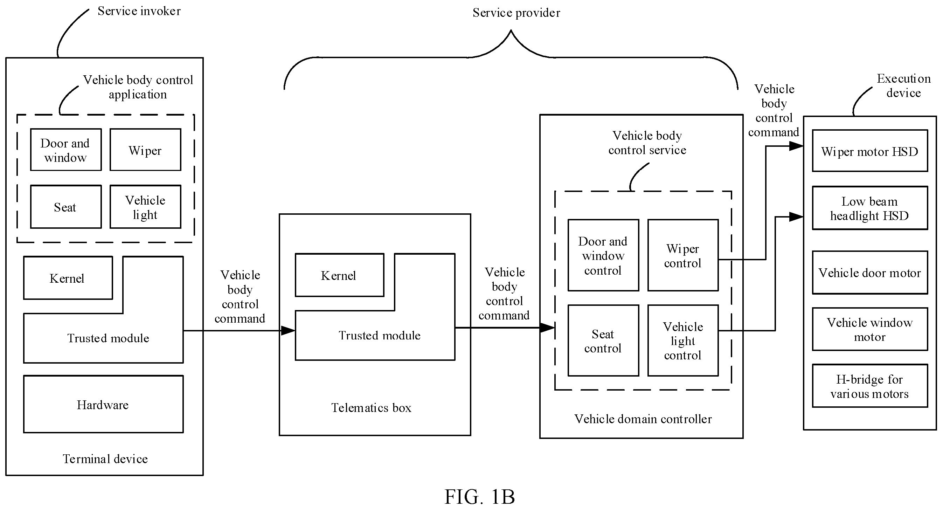

As shown in FIG. 1A and FIG. 1B, a system to which the service invoking method provided in this application is applicable mainly includes a service invoker, a service provider, and an execution device.

The service invoker is a device or a functional module that generates a control command in response to an instruction of a user to invoke a service corresponding to the control command. The service provider is a device or a functional module that provides a service based on a control command in a vehicle. In addition, the execution device is configured to execute a control command to implement a service corresponding to the control command. The service may be vehicle body control services such as opening and closing a vehicle door, opening and closing a vehicle window, turning on and off a wiper, and adjusting a seat, may be an over the air (over the air technology, OTA) technology that usually refers to services such as upgrade and diagnosis, or may be another vehicle service. This is not limited in this application.

For example, the service is the vehicle body control service. The vehicle body control service may be a door and window control service, a wiper control service, a seat control service, a vehicle light control service, or the like. If the user expects to open the vehicle window, the user may trigger, by using the service invoker, generation of a control command indicating to open the vehicle window. After receiving the control command, the service provider performs validity check on the control command. If the service provider determines that the control command is a valid command, the service provider sends the control command to an execution device corresponding to the control command.

For example, the service invoker may be an intelligent cockpit or an intelligent terminal device (for example, a smartphone, a smart watch, or another intelligent wearable device). The service provider may be a vehicle domain controller (also referred to as vehicle domain control (vehicle domain control, VDC) or vehicle domain control), may be a telematics box (Telematics Box, T-Box) in the vehicle, or may be a combination of a T-Box and a vehicle domain controller. The execution device may be a motor or a controller that drives vehicle body hardware. For example, if the control command is to open the vehicle window, the execution device is a control motor related to the vehicle window, and the vehicle window is controlled to be opened by starting the control motor. It should be noted that, in this application, when the service invoker is the intelligent cockpit, the service provider is the vehicle domain controller. For example, in the example shown in FIG. 1A, the user may trigger generation of a control command by tapping a key on a touchscreen in the intelligent cockpit. After receiving the control command, the vehicle domain controller performs validity check on the control command, to determine whether to send the control command to an execution device corresponding to the control command. When the service invoker is the terminal device, the service provider includes the telematics box and/or the vehicle domain controller. For example, in the example shown in FIG. 1B, the user may trigger generation of a control command by using the intelligent terminal. After receiving the control command, the telematics box may perform validity check on the control command. Alternatively, the telematics box may transparently transmit the control command to the vehicle domain controller, and the vehicle domain controller performs validity check on the control command.

In addition, a processing architecture of the service invoker includes a kernel and a trusted module. Permission of the trusted module is higher than permission of the kernel, and the trusted module is less prone to an attack than the kernel. For ease of understanding, the following provides descriptions with reference to examples of two common processor architectures.

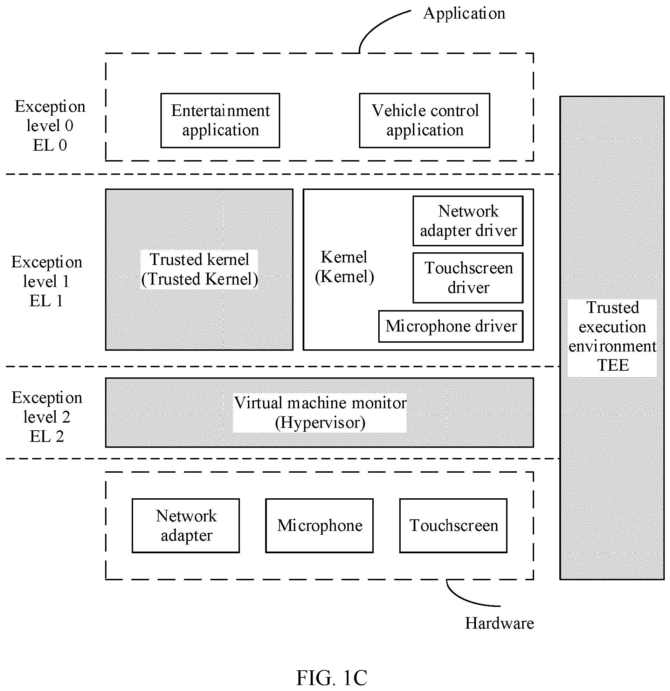

FIG. 1C shows an example of a processor architecture to which the service invoking method in this application is applicable. The example shows an advanced reduced instruction set computer machine (Advanced RISC Machine, ARM) architecture. In this architecture, the service invoker includes a plurality of exception levels (exception levels, ELs), and permission ascends up from an exception level 0 (EL 0), an exception level 1 (EL 1), to an exception level 2 (EL 2), that is, execution permission of software correspondingly ascends up. The EL 0 is referred to as unexceptional execution, and is used to run a vehicle body control application. The EL 1 is used to run an operating system (namely, a kernel (Kernel)). The EL 2 provides support for virtualization, and is used to run a virtual machine monitor (Hypervisor). Optionally, the EL 1 is further used for a trusted kernel (Trusted Kernel). In addition, the ARM architecture based on a hardware isolation technology may further run a trusted execution environment (trusted execution environment, TEE). In the architecture shown in FIG. 1C, any one of the virtual machine monitor (Hypervisor), the trusted kernel, and the trusted execution environment may be used as the trusted module to perform the service invoking method described below.

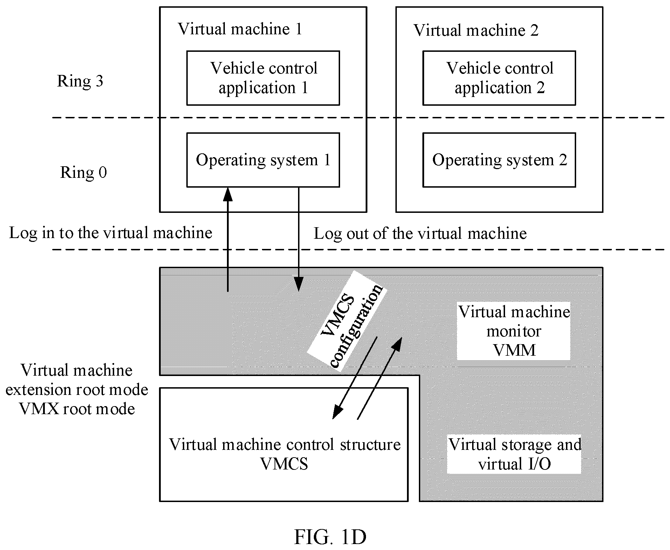

FIG. 1D shows an example of another processor architecture to which the service invoking method in this application is applicable. The example shows an X86_64 architecture. In the architecture, the service invoker includes a plurality of rings (Rings). Permission descends down from a ring 0 (Ring 0) to a ring 3 (Ring 3), that is, execution permission of software correspondingly descends down. The Ring 3 has lowest permission and is used to run a vehicle body control application. The Ring 0 has higher permission than that of the Ring 3, and is usually used to run an operating system (namely, a kernel (Kernel)). In addition, permission of a virtual machine extension root mode (virtual machine extension root mode, VMX root mode) (also referred to as a privilege mode in a hardware virtualization technology) is higher than permission of a virtual machine extension non-root mode (virtual machine extension non-root mode, VMX non-root mode) (also referred to as a non-privilege mode in the hardware virtualization technology). The virtual machine extension root mode is used to run a virtual machine monitor (virtual machine monitor, VMM), and the virtual machine monitor controls execution of a virtual machine by configuring a virtual machine control structure (virtual machine control data structure, VMCS). In the architecture shown in FIG. 1D, both the virtual machine monitor VMM and the virtual machine control structure VMCS may be used as the trusted module to perform the service invoking method described below.

In the system, the service provider in the conventional technology performs validity check on the control command based on an ID sent by the service invoker. When the service invoker is hacked, the service ID is easily obtained or forged. As a result, validity check performed on the control command only based on the service ID cannot ensure security of service invoking on the vehicle.

In view of this, this application provides a service invoking method, which is mainly applied to a software-based vehicle body control scenario. In the method, verification is performed on a received control command based on behavior of a user, so that a control command forged by an attacker can be identified, to improve security of invoking a vehicle body control service.

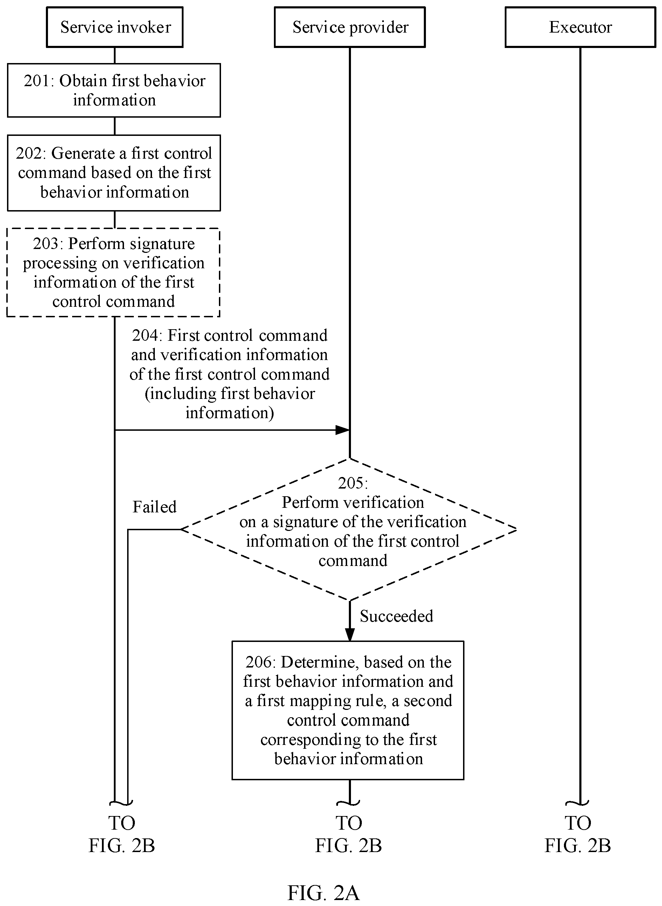

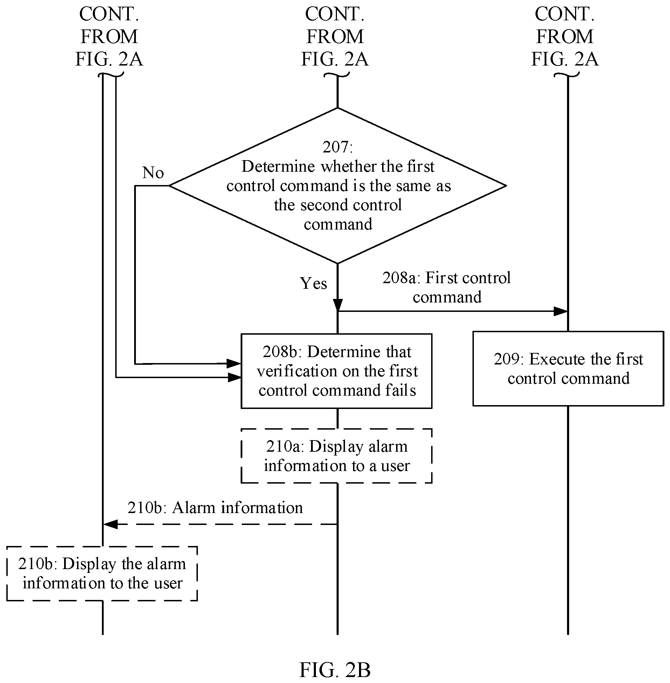

The following describes a main procedure of an embodiment of the service invoking method in this application with reference to FIG. 2A and FIG. 2B. In the method, a service invoker and a service provider mainly perform the following steps.

Step 201: The service invoker obtains first behavior information.

The first behavior information indicates behavior of a user in triggering generation of a first control command. The first control command is used to invoke a first service. For example, if the first control command is a vehicle body control command, the first service is a vehicle body control service. For example, if the first control command is a vehicle door opening command, the first service is a vehicle door opening service; if the first control command is a vehicle window opening command, the first service is a vehicle window opening service; or if the first control command is a wiper turn-on command, the first service is a wiper turn-on service. The first behavior information may also be understood as behavior that is detected by the service invoker and that is sent by the user and that can trigger the generation of the first control command to invoke the first service.

Specifically, specific implementations in which the service invoker detects the first behavior information vary with input/output hardware used when the user inputs an instruction.

In a possible implementation, if the user enters the instruction on a touchscreen, the first behavior information includes first coordinates, and the first coordinates are coordinates corresponding to the operation of the user. Optionally, if the first behavior information further includes first time information, first time indicated by the first time information is time at which the coordinates are generated based on the operation of the user.

It should be noted that the first coordinates may be coordinates corresponding to an operation like tapping or sliding performed by the user on the touchscreen (for example, a vehicle-mounted central control display). Specifically, the first coordinates may be coordinate values of a tap position on the touchscreen. For example, the user can trigger the generation of the first control command by tapping only one key on the touchscreen. In addition, the first coordinates may alternatively be coordinate values of several tap positions on the touchscreen. For example, the user can trigger the generation of the first control command only by continuously tapping several keys on the touchscreen. In addition, the first coordinates may alternatively be a continuous coordinate range. For example, the user continuously slides on the touchscreen to make a specific sliding gesture (for example, a finger slides to left on the touchscreen or a finger slides to right on the touchscreen), and the specific gesture can trigger the generation of the first control command. In actual application, other behavior of the user may alternatively enable the service invoker to detect one or more coordinates.

In another possible implementation, if the user inputs a voice instruction by using a microphone, the first behavior information includes first semantic information, and the first semantic information is semantics generated based on the voice instruction input by the user. Optionally, the first behavior information further includes the first time information, and the first time indicated by the first time information is time at which the service invoker detects the voice instruction.

In actual application, in addition to tapping the touchscreen of the intelligent cockpit and sending the voice instruction, the behavior of generating the first behavior information may be other behavior that can implement human-machine interaction. For example, a specific gesture made by the user is detected by using a sensor. This is not limited herein. In the following embodiments, an example in which the first behavior information includes the first coordinates and the first time is used for detailed description.

Optionally, a trusted module in the service invoker obtains the first behavior information. Specifically, the user generates an electrical signal by using hardware (for example, input/output hardware) in the service invoker, and transmits the electrical signal to the trusted module. The trusted module adds a timestamp to the electrical signal, to obtain the first behavior information.

The trusted module is a processing module whose permission is higher than that of an operating system (namely, a kernel), that is, the permission of the trusted module in the service invoker is higher than the permission of the kernel in the service invoker. It may also be understood that permission of a running environment of the trusted module is higher than permission of a running environment of the kernel. Because the permission of the trusted module is higher than the permission of the kernel, it is not easy for the attacker to crack the trusted module and tamper with data in the trusted module. Therefore, compared with a solution in the conventional technology in which the first behavior information is obtained by the kernel, a solution in which the first behavior information is obtained by the trusted module can make the first behavior information less prone to be stolen or tampered with. This improves accuracy and security of the first behavior information obtained by the service invoker.

It should be noted that, in different processor architectures, specific implementation forms of the trusted module are different. For example, in the ARM architecture shown in FIG. 1C, the trusted module may be implemented by any one of the trusted kernel (Trusted Kernel), the virtual machine monitor (Hypervisor), and the trusted execution environment TEE. For example, in the X86_64 architecture shown in FIG. 1D, the trusted module may be the virtual machine monitor VMM or the virtual machine control structure VMCS.

Optionally, the running environment of the trusted module and the running environment of the kernel are independent of each other. When the kernel is attacked by an attacker, the trusted module is not affected. Therefore, even if data in the kernel is subject to tampering of the attacker, data in the trusted module is not affected, and the data in the trusted module is still accurate and secure.

Optionally, the trusted module has read permission and write permission on a storage module, the kernel has no access permission on the storage module, and the storage module is configured to store the first behavior information. The storage module includes a register and/or a memory. Because the kernel in the conventional technology has read permission and/or write permission on the storage module, the data in the kernel in the conventional technology is prone to be attacked and tampered with. The kernel in the service invoker in this application is configured to have no access permission on the storage module. Therefore, the attacker can be prevented from stealing or tampering with data in the storage module by using the kernel. In addition, the trusted module in the service invoker in this application is configured to have the read permission and the write permission on the storage module. The permission of the trusted module is essentially higher than the permission of the kernel and is less prone to be cracked by the attacker compared with the kernel. Therefore, this can ensure the accuracy and the security of the first behavior information obtained by the trusted module.

It should be noted that electrical signals transmitted to the trusted module vary with input/output hardware used by the user. The following separately provides descriptions.

In a possible implementation, if the user enters the instruction on the touchscreen, the first behavior information includes the first coordinates and the first time. For example, when the user taps the touchscreen in the intelligent cockpit, a register of the touchscreen performs digital processing on a detected electrical signal, and then transmits the electrical signal to the trusted module.

For ease of understanding, the processor architecture shown in FIG. 1C is used as an example. If the trusted module is the virtual machine monitor (Hypervisor), after the touchscreen detects a tap operation of the user and records coordinates of the tap in the storage module, the virtual machine monitor can obtain the coordinates of the tap by the user from the storage module, that is, the trusted module obtains the first coordinates. Trustedly, the virtual machine monitor (Hypervisor) adds the timestamp after obtaining the first coordinates, to obtain the first behavior information including the first coordinates and the first time. It should be noted that a process in which another trusted module (for example, the trusted kernel, the TEE, or the VMM) in the examples shown in FIG. 1C and FIG. 1D obtains the first behavior information is similar to the process in which the virtual machine monitor obtains the first behavior information. Details are not described herein.

In another possible implementation, if the user inputs the voice instruction by using the microphone, the first behavior information includes the first semantic information and the first time. For example, when the user sends the voice instruction, the microphone converts a detected analog signal into an electrical signal, transmits the electrical signal to a semantic recognition module to recognize semantic information, and then transmits the semantic information to the trusted module.

For ease of understanding, the processor architecture shown in FIG. 1C is still used as an example. If the trusted module is the virtual machine monitor (Hypervisor), after the microphone detects the voice instruction of the user, converts the semantic instruction into the semantic information, and records the semantic information in the storage module, the virtual machine monitor can obtain the semantic information from the storage module, that is, the trusted module obtains the first semantic information. Trustedly, the virtual machine monitor (Hypervisor) adds the timestamp after obtaining the first semantic information, to obtain the first behavior information including the first semantic information and the first time.

Step 202: The service invoker generates the first control command based on the first behavior information.

Specifically, an example in which the first behavior information includes the first coordinates and the first time is used. The service invoker determines, based on the first coordinates, an area in which the first coordinates are located relative to the touchscreen, and then generates the first control command based on the area. Optionally, the kernel in the service invoker may generate the first control command based on the first behavior information.

For example, if a key on the touchscreen corresponding to the first coordinates is "open the vehicle door", the service invoker generates, based on the first coordinates, a control command used to open the vehicle door, so that after the control command used to open the vehicle door is sent to the service provider, a service for opening the vehicle door can be invoked.

It should be noted that a specific implementation of the first control command may be a string of command code, or may be a command identifier. The specific implementation of the control command is not limited in this application.

Step 203: The service invoker performs signature processing on verification information of the first control command.

In this embodiment, step 203 is an optional step. If the service invoker performs step 203, the service provider performs step 205 after receiving the verification information of the first control command. If the service invoker does not perform step 203, the service provider does not perform step 205 after receiving the verification information of the first control command, but performs step 206.

The verification information of the first control command is used by the service provider to perform verification on the first control command, and the verification information of the first control command includes the first behavior information, that is, the first behavior information obtained by the service invoker in step 201.

Optionally, the trusted module in the service invoker performs signature processing on the verification information of the first control command (namely, the first behavior information) by using a key. For example, after obtaining the first behavior information, the trusted module in the service invoker performs signature processing on the verification information of the first control command (namely, the first behavior information) by using the key.

For ease of understanding, the processor architecture shown in FIG. 1C is used as an example. If the trusted module is implemented by two modules (for example, the trusted module is the virtual machine monitor and the TEE), after the virtual machine monitor obtains the first behavior information, the virtual machine monitor transmits the first behavior information to the TEE, and the TEE performs signature processing on the first behavior information, and returns, to the virtual machine monitor, the first behavior information on which signature processing is performed. Alternatively, after obtaining the first behavior information, the virtual machine monitor stores the first behavior information in a trusted memory, and the TEE obtains the first behavior information from the trusted memory of the virtual machine monitor, performs signature processing on the first behavior information, and writes, into the trusted memory of the virtual machine monitor, the first behavior information on which signature processing is performed. If the trusted module is implemented by one module (for example, the trusted module is the virtual machine monitor), after the virtual machine monitor obtains the first behavior information, the virtual machine monitor performs signature processing on the first behavior information, to obtain the first behavior information on which signature processing is performed. A trusted module that specifically implements a signature processing function is not limited in this application.

In this implementation, the first behavior information is obtained by the trusted module, the trusted module has high permission, and it is not easy for the attacker to crack the trusted module and tamper with the information in the trusted module. Therefore, the first behavior information is secure and reliable, and the first behavior information that is obtained by the trusted module and that is used as the verification information of the first control command is also secure and reliable. Compared with a solution in the conventional technology in which an application identifier of the vehicle body control service is used as the verification information, the solution in which the first behavior information is obtained by the trusted module makes the first behavior information less prone to be tampered with and forged than the application identifier. Therefore, the solution in which the first behavior information is used as the verification information of the first control command is more reliable and secure.

In addition, in this embodiment, the verification information of the first control command is signed by using the key. This helps further prevent the attacker from forging the verification information of the first control command, and helps improve reliability and security of the verification information of the first control command.

Step 204: The service invoker sends the first control command and the verification information of the first control command to the service provider; and correspondingly, the service provider receives the first control command and the verification information of the first control command from the service invoker.

Optionally, the verification information of the first control command is signed by the service invoker by using the key, that is, signature processing is performed on the verification information of the first control command by the service invoker. The verification information of the first control command includes the first behavior information.

Step 205: The service provider performs verification on a signature of the verification information of the first control command.

In this embodiment, step 205 is an optional step. If the service invoker performs step 203, the service provider performs step 205 after receiving the verification information of the first control command. If the service invoker does not perform step 203, the service provider does not perform step 205 after receiving the verification information of the first control command, but performs step 206.

Specifically, the service provider performs verification on the signature of the verification information of the first control command by using a key. The key may be a symmetric key or an asymmetric key. This is not limited herein. For example, if the service invoker performs signature processing on the verification information of the first control command by using a private key of the service invoker, the service provider needs to perform verification processing on the verification information of the first control command by using a public key of the service invoker. For another example, if the service invoker performs signature processing on the verification information of the first control command by using a symmetric key, the service provider needs to perform verification processing on the verification information of the first control command by using the symmetric key.

It should be further noted that the service provider can determine, based on information preconfigured by operation and maintenance personnel, whether all received control commands are signed. For example, if the operation and maintenance personnel configure steps related to signature verification for both the service invoker and the service provider, that is, the operation and maintenance personnel configure the service invoker to perform step 203, and the service provider to perform step 205, the service provider performs verification on each received control command (for example, the first control command), to determine whether the received control command (for example, the first control command) is a control command that is validly signed.

The first control command is used as an example. If the verification performed by the service provider on the signature of the verification information of the first control command by using the public key of the service invoker succeeds, it indicates that the signature on the first control command is from the service invoker, that is, the first control command is a command that is validly signed, and the service provider performs step 206; or if the verification performed by the service provider on the signature of the verification information of the first control command by using the public key of the service invoker fails, it indicates that the signature on the first control command is not from the service invoker, that is, the first control command may be forged by an attacker, and the service provider performs step 208b.

Optionally, if the first behavior information includes the first time information, before performing step 206, the service provider further needs to determine, based on the first time information, whether the first control command is under a replay attack. Specifically, the service provider may determine whether a difference between a moment indicated by the first time information and a current moment exceeds the first threshold. If the difference between the moment indicated by the first time information and the current moment is within the first threshold, it indicates that the verification information of the first control command is not intercepted and then retransmitted by an attacker, and the service provider triggers execution of step 206; or if the difference between the moment indicated by the first time information and the current moment exceeds the first threshold, it indicates that the verification information of the first control command may be intercepted and then retransmitted by an attacker, and the service provider stops triggering execution of step 206, but triggers execution of step 208b.

Step 206: The service provider determines, based on the first behavior information and a first mapping rule, a second control command corresponding to the first behavior information.

The first mapping rule is a mapping rule that is preconfigured on the service provider and that is used to perform verification on the verification information of the first control command. The first mapping rule includes at least one type of behavior information and a control command corresponding to each type of behavior information. The service provider searches the at least one type of behavior information in the first mapping rule for the first behavior information, and further determines that the control command corresponding to the first behavior information is the second control command.

It should be noted that, behavior information included in the first mapping rule varies with implementations of the first behavior information. The following separately provides descriptions.

In a possible implementation, the first behavior information includes the first coordinates and the first time, and each of the at least one type of behavior information in the first mapping rule includes at least one coordinate area. Specifically, the service provider first determines a coordinate area in which the first coordinates are located, and then the service provider determines, according to the first mapping rule, that a control command corresponding to the coordinate area in which the first coordinates are located is the second control command.

For example, if the behavior information includes the coordinate area, the first mapping rule may be shown in Table 1-1.

**Table 1-1**

| Coordinate area | Control command corresponding to each type of behavior information |
|---|---|
| a₀<X<b₀ and c₀<Y<d₀ | Vehicle door opening command |
| a₁<X<b₁ and c₁<Y<d₁ | Vehicle window opening command |
| e₀<X< f₀ and c₂<Y<d₂ | Wiper turn-on command |

In the example shown in Table 1-1, X indicates a horizontal coordinate, Y indicates a vertical coordinate, and a coordinate area determined by value ranges of X and Y corresponds to a key on the touchscreen. For example, a key corresponding to the coordinate area determined by a₀<X<b₀ and c₀<Y<d₀ is a "vehicle door opening key". Therefore, a control command corresponding to the coordinate area is the "vehicle door opening command". For another example, a key corresponding to the coordinate area determined by a₁<X<b₁ and c₁<Y<d₁ is a "vehicle window opening key". Therefore, a control command corresponding to the coordinate area is the "vehicle window opening command".

For example, if the first coordinates are X=a₃ and Y=b₃, and a₀<a₃<b₀ and c₀<b₃<d₀, the service provider determines, based on the first coordinates and the first mapping rule, that the second control command corresponding to the first behavior information is the "vehicle door opening command".

In another possible implementation, the first behavior information includes the first semantic information and the first time, and each of the at least one type of behavior information in the first mapping rule includes one piece of semantic information. Specifically, the service provider determines, according to the first mapping rule, that a control command corresponding to the first semantic information is the second control command.

For example, if the behavior information includes the semantic information, the first mapping rule may be shown in Table 1-2.

**Table 1-2**

| Semantic information | Control command corresponding to each type of behavior information |
|---|---|
| "Open the vehicle door" | Vehicle door opening command |
| "Open the vehicle window" | Vehicle window opening command |
| "Turn on the wiper" | Wiper turn-on command |

In the example shown in Table 1-2, if the semantic information included in the first behavior information received by the service provider is "open the vehicle door", the service provider determines, based on the semantic information and the first mapping rule, that the second control command corresponding to the first behavior information is the "vehicle door opening command".

It should be noted that a specific implementation of the control command in the first mapping rule (for example, Table 1-1 or Table 1-2) may be a string of command code, or may be a command identifier. The specific implementation of the control command is not limited in this application.

Step 207: The service provider determines whether the first control command is the same as the second control command.

If the first control command is the same as the second control command, it indicates that the first control command is a valid command initiated by the user, and the service provider performs step 208a; or if the first control command is different from the second control command, it indicates that the first control command is not a valid command initiated by the user, and the service provider performs step 208b.

Step 208a: The service provider sends the first control command to an execution device.

When the first control command is the same as the second control command, the service provider determines that the verification on the first control command succeeds, that is, the first control command is the valid command initiated by the user, and sends the first control command to the execution device, so that the execution device executes the first control command.

Step 208b: The service provider determines that the verification on the first control command fails.

When the first control command is different from the second control command, the service provider determines that the verification on the first control command fails, that is, the first control command is not a valid command initiated by the user. In this case, the service provider does not send the first control command to the execution device. Optionally, the service provider further triggers an alarm procedure. Specifically, the service provider performs step 210a or step 210b.

Step 209: The execution device executes the first control command.

After receiving the first control command from the service provider, the execution device executes the first control command to invoke the first service. For example, if the first control command is the vehicle door opening command, the execution device is a controller or a drive device related to the vehicle door, and the execution device controls the vehicle door to open. For another example, if the first control command is the vehicle window opening command, the execution device is a controller or a drive device related to the vehicle window, and the execution device controls the vehicle window to open.

Step 210a: The service provider prompts the user with alarm information.

Step 210a is an optional step.

The alarm information indicates that the verification on the first control command fails. It may also be understood that the alarm information indicates that it is verified that the first control command is invalid.

Optionally, the service provider can control communication of an input/output device of the vehicle, and further can prompt the user with the alarm information via the input/output device. For example, if the service provider can control a speaker of the vehicle, the service provider may control the speaker to broadcast the alarm information to the user through voice broadcast. For another example, if the service provider can control a central control display of the vehicle, the service provider may control the central control display to display the alarm information to the user through text and/or an image. Input/output devices that can be used by the service provider for communication or control are not limited in this application, and are not listed one by one herein.

Step 210b: The service provider sends the alarm information to the service invoker; and correspondingly, the service invoker receives the alarm information from the service provider, and then the service invoker prompts the user with the alarm information.

Step 210b is an optional step.

After the service invoker receives the alarm information, the service invoker prompts the user with the alarm information.

In a possible example, the service invoker is a device located in the vehicle. For example, the service invoker is an intelligent cockpit in the vehicle, and the service provider is a vehicle domain controller. The vehicle domain controller sends the alarm information to the intelligent cockpit, and the intelligent cockpit prompts the user with the alarm information via a connected input/output device. For example, the intelligent cockpit may control the speaker to broadcast the alarm information to the user through voice broadcast. For another example, the intelligent cockpit may control the central control display to display the alarm information to the user through text and/or an image. For another example, the intelligent cockpit may control a head up display (head up display, HUD) to display the alarm information to the user through text and/or an image. In actual application, the intelligent cockpit may further communicate with other output/input devices, which are not listed one by one herein.

In another possible example, the service invoker is a device that can communicate with the vehicle. For example, the service invoker is an intelligent terminal device (for example, a smartphone, a smart watch, or another intelligent wearable device). The service provider is a vehicle domain controller, or the service provider is a combination of a telematics box T-Box and a vehicle domain controller in the vehicle. In this example, the intelligent terminal device can receive the alarm information from the vehicle domain controller via the telematics box T-Box in the vehicle, so that the terminal device can prompt the alarm information through voice broadcast, or display the alarm information to the user through text and/or an image.

In this embodiment, the service invoker delivers the permission to obtain the first behavior information from the kernel with lower permission (for example, the kernel (Kernel) in the exception level 1 (EL 1)) to the trusted module with higher permission (for example, the virtual machine monitor (Hypervisor) in the exception level 2 (EL 2)). The data in the trusted module with higher permission is less prone to be tampered with than the data in the kernel with lower permission. Therefore, the service invoker obtains the first behavior information by using the trusted module instead of the kernel. This helps prevent the first behavior information obtained by the service invoker from being tampered with or forged, and further helps ensure security of the verification information of the first control command sent to the service provider.

In addition, the verification information that is received by the service provider and that is used to perform verification on the first control command includes the first behavior information, and the service provider can determine, based on the first behavior information, whether the first control command is triggered by the behavior of the user. When the service provider determines that the first control command is the same as the second control command determined based on the first behavior information, the service provider determines that the first control command is triggered by the user and is not tampered with, and triggers sending of the first control command to the execution device. Therefore, this helps improve security of invoking the vehicle body control service.

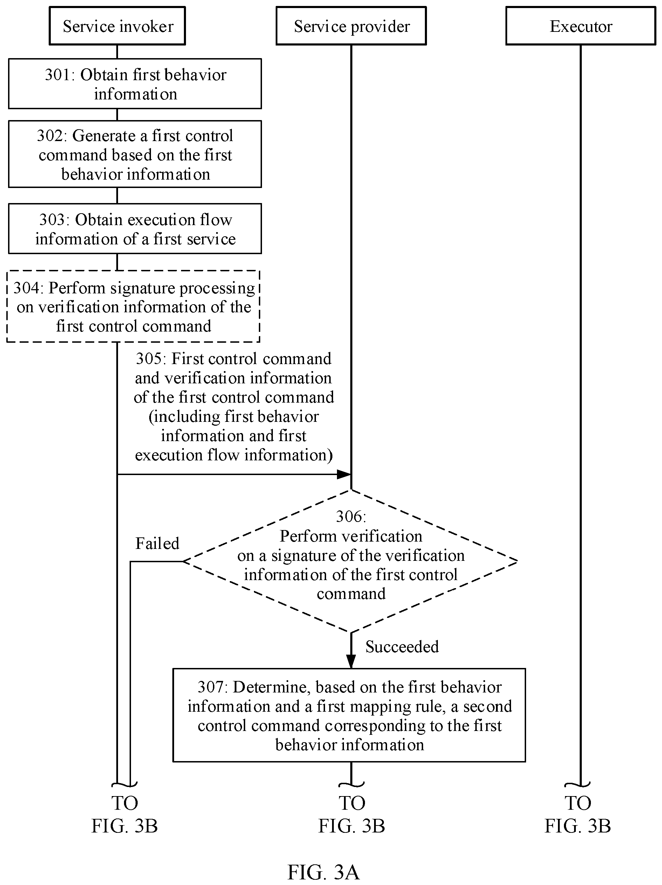

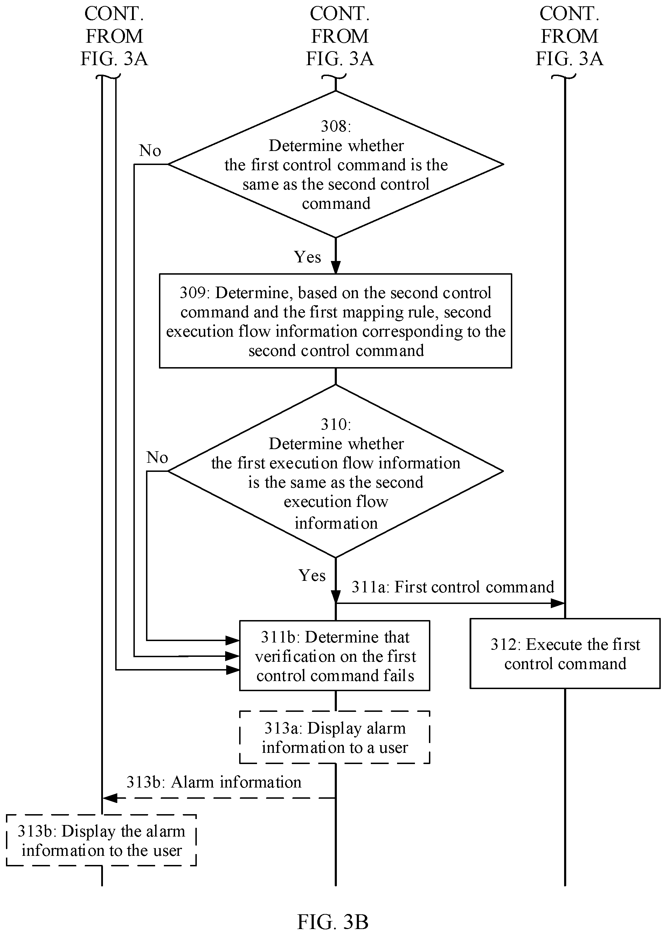

The following describes a main procedure of another embodiment of the service invoking method in this application with reference to FIG. 3A and FIG. 3B. In the method, a service invoker and a service provider mainly perform the following steps.

Step 301: The service invoker obtains first behavior information.

Optionally, a trusted module in the service invoker obtains the first behavior information.

Step 302: The service invoker generates a first control command based on the first behavior information.

Step 301 and step 302 are similar to step 201 and step 202. For details, refer to the related descriptions in step 201 and step 202. Details are not described herein.

Step 303: The service invoker obtains first execution flow information.

The execution flow (also referred to as a control flow (control flow)) is a set of instructions executed by the service invoker in a process of generating the control command based on the behavior information. Therefore, an execution flow for invoking a service can reflect integrity of the service invoking process. If tampering behavior of an attacker occurs in the service invoking process, the execution flow collected by the service invoker should include instructions that reflect the tampering behavior. Therefore, the execution flow that is for invoking the service and that is executed during generation of the control command triggered by the user is different from an execution flow that is for invoking a service and that is subject to tampering of an attacker. Therefore, the execution flow for invoking the service is used as verification information of the control command. This helps the service provider identify whether there is an attack, and helps improve security of the service invoking process.

The first execution flow information indicates process information for invoking a first service. For example, the first execution flow information is information generated in a process in which the service invoker generates the first control command based on the first behavior information. Therefore, the first execution flow information can indicate integrity of a process of invoking the first service. Optionally, the first execution flow information is an execution flow for invoking the first service or a hash value of an execution flow for invoking the first service. For example, when generating the first control command, the service invoker directly determines, as the verification information of the first control command, the obtained execution flow for invoking the first service. For another example, after generating the first control command and collecting the execution flow for invoking the first service, the service invoker performs, by using a hash algorithm, hash calculation on the execution flow for invoking the first service, to obtain the hash value of the execution flow for invoking the first service, and uses the hash value of the execution flow for invoking the first service as the verification information of the first control command.

Optionally, the trusted module in the service invoker obtains the first execution flow information. Optionally, the trusted module in the service invoker may collect the execution flow based on hardware (for example, a hardware module (for example, an on-chip debugging module like coresight) in an ARM architecture, a processor trace (processor trace, PT) module in an Intel architecture, or a performance monitoring unit (performance monitoring unit, PMU)), or collect the execution flow through software instrumentation. This is not specifically limited herein.

In a possible example, a kernel in the service invoker generates the first control command based on the first behavior information. In addition, the trusted module in the service invoker collects the execution flow that is of the first service and that is generated when the kernel generates the first control command. Then, the trusted module in the service invoker determines the first behavior information and the execution flow of the first service as the verification information of the first control command.

In another possible example, when the kernel in the service invoker generates the first control command based on the first behavior information, the trusted module in the service invoker collects the execution flow that is of the first service and that is generated when the kernel generates the first control command. Then, the trusted module in the service invoker calculates the hash value of the execution flow of the first service. Then, the trusted module in the service invoker determines the first behavior information and the hash value of the execution flow of the first service as the verification information of the first control command.

In this step, because the first execution flow information is obtained by the trusted module in the service invoker, it can be ensured that the first execution flow information used as the verification information is secure and reliable. In addition, the first execution flow information is information that is inevitably generated when the service invoker generates the first control command based on the first behavior information. Therefore, use of the first execution flow information as one of the verification information can ensure that the first control command is triggered by the user instead of being forged by the attacker. Therefore, use of the first execution flow information and the first behavior information as the verification information of the first control command helps improve security and reliability of a vehicle body control service.

Step 304: The service invoker performs signature processing on the verification information of the first control command.

In this embodiment, step 304 is an optional step. If the service invoker performs step 304, the service provider performs step 306 after receiving the verification information of the first control command. If the service invoker does not perform step 304, the service provider does not perform step 306 after receiving the verification information of the first control command, but performs step 307.

The verification information of the first control command is used to perform verification on the first control command. The verification information of the first control command includes the first behavior information (namely, the first behavior information obtained by the service invoker in step 301) and the first execution flow information (namely, the first execution flow information obtained by the service invoker in step 303).

Specifically, after the trusted module in the service invoker obtains the first behavior information and the first execution flow information, the service invoker performs signature processing on the verification information of the first control command (namely, the first behavior information and the first execution flow information) by using a key.

For ease of understanding, the processor architecture shown in FIG. 1C is used as an example. If the trusted module is implemented by two modules (for example, the trusted module is the virtual machine monitor and the TEE), after the virtual machine monitor obtains the first behavior information and the first execution flow information, the virtual machine monitor transmits the first behavior information and the first execution flow information to the TEE, and the TEE performs signature processing on both the first behavior information and the first execution flow information, and returns, to the virtual machine monitor, the verification information of the first control command on which signature processing is performed. Alternatively, after obtaining the first behavior information and the first execution flow information, the virtual machine monitor stores the first behavior information and the first execution flow information in a trusted memory, and the TEE obtains the first behavior information and the first execution flow information from the trusted memory of the virtual machine monitor, performs signature processing on the first behavior information and the first execution flow information, and writes, into the trusted memory of the virtual machine monitor, the first behavior information and the first execution flow information on which signature processing is performed. If the trusted module is implemented by one module (for example, the trusted module is the virtual machine monitor), after the virtual machine monitor obtains the first behavior information and the first execution flow information, the virtual machine monitor performs signature processing on both the first behavior information and the first execution flow information, to obtain the verification information of the first control command on which signature processing is performed. A trusted module that specifically implements a signature processing function is not limited in this application.

In this embodiment, the verification information of the first control command is signed by using the key. This helps further prevent the attacker from forging the verification information of the first control command, and helps improve reliability and security of the verification information of the first control command.

Step 305: The service invoker sends the first control command and the verification information of the first control command to the service provider; and correspondingly, the service provider receives the first control command and the verification information of the first control command from the service invoker.

Optionally, the verification information of the first control command is signed by the service invoker by using the key. The verification information of the first control command includes the first behavior information and the first execution flow information.

Step 306: The service provider performs verification on a signature of the verification information of the first control command.

In this embodiment, step 306 is an optional step. If the service invoker performs step 304, the service provider performs step 306 after receiving the verification information of the first control command. If the service invoker does not perform step 304, the service provider does not perform step 306 after receiving the verification information of the first control command, but performs step 307.

Specifically, the service provider performs verification on the signature of the verification information of the first control command by using a key. The key may be a symmetric key or an asymmetric key. This is not limited herein. For details, refer to the related description in step 205. Details are not described herein.

The first control command is used as an example. If the verification performed by the service provider on the signature of the verification information of the first control command by using a public key of the service invoker succeeds, it indicates that the signature on the first control command is from the service invoker, that is, the first control command is a command that is validly signed, and the service provider performs step 307; or if the verification performed by the service provider on the signature of the verification information of the first control command by using a public key of the service invoker fails, it indicates that the signature on the first control command is not from the service invoker, that is, the first control command may be forged by an attacker, and the service provider performs step 311b.

Optionally, if the first behavior information includes first time information, before performing step 307, the service provider further needs to determine, based on the first time information, whether the first control command is under a replay attack. Specifically, the service provider may determine whether a difference between a moment indicated by the first time information and a current moment exceeds the first threshold. If the difference between the moment indicated by the first time information and the current moment is within the first threshold, it indicates that the verification information of the first control command is not intercepted and then retransmitted by an attacker, and the service provider triggers execution of step 307; or if the difference between the moment indicated by the first time information and the current moment exceeds the first threshold, it indicates that the verification information of the first control command may be intercepted and then retransmitted by an attacker, and the service provider stops triggering execution of step 307, but triggers execution of step 311b.

Step 307: The service provider determines, based on the first behavior information and a first mapping rule, a second control command corresponding to the first behavior information.

The first mapping rule includes at least one type of behavior information and a control command corresponding to each type of behavior information.

Specifically, step 307 is similar to step 206. For details, refer to the related description in step 206. Details are not described herein.

Step 308: The service provider determines whether the first control command is the same as the second control command.

If the first control command is the same as the second control command, the service provider performs step 309; or if the first control command is different from the second control command, it indicates that the first control command is not a valid command initiated by the user, and the service provider performs step 311b.

Step 309: The service provider determines, based on the second control command and the first mapping rule, second execution flow information corresponding to the second control command.

In this embodiment, in addition to including the at least one type of behavior information and the control command corresponding to each type of behavior information, the first mapping rule further includes execution flow information of a service corresponding to each control command. The service provider can not only search the first mapping rule for the second control command corresponding to the first behavior information, but also find, based on the second control command, the second execution flow information corresponding to the second control command.

It should be noted that, behavior information included in the first mapping rule varies with implementations of the first behavior information. The following separately provides descriptions.

In a possible implementation, the first behavior information includes first coordinates and first time, and each of the at least one type of behavior information in the first mapping rule includes at least one coordinate area.

For example, if the behavior information includes the coordinate area, the first mapping rule may be shown in Table 2-1.

**Table 2-1**

| Coordinate area | Control command corresponding to each type of behavior information | Execution flow information of a service corresponding to each control command |
|---|---|---|
| a₀<X<b₀ and c₀<Y<d₀ | Vehicle door opening command | Execution flow information about opening the vehicle door |
| a₁<X<b₁ and c₁<Y<d₁ | Vehicle window opening command | Execution flow information about opening the vehicle window |
| e₀<X< f₀ and c₂<Y<d₂ | Wiper turn-on command | Execution flow information about turning on the wiper |

Specifically, the service provider first determines a coordinate area in which the first coordinates are located, then the service provider determines, according to the first mapping rule, that a control command corresponding to the coordinate area in which the first coordinates are located is the second control command, and the service provider determines the second control command according to the first mapping rule.

In another possible implementation, the first behavior information includes first semantic information and first time, and each of the at least one type of behavior information in the first mapping rule includes one piece of semantic information.

For example, if the behavior information includes the semantic information, the first mapping rule may be shown in Table 2-2.

**Table 2-2**

| Semantic information | Control command corresponding to each type of behavior information | Execution flow information of a service corresponding to each control command |
|---|---|---|
| "Open the vehicle door" | Vehicle door opening command | Execution flow information about opening the vehicle door |
| "Open the vehicle window" | Vehicle window opening command | Execution flow information about opening the vehicle window |
| "Turn on the wiper" | Wiper turn-on command | Execution flow information about turning on the wiper |

Specifically, the service provider determines, according to the first mapping rule, that a control command corresponding to the first semantic information is the second control command, and then the service provider determines the second control command according to the first mapping rule.

Step 310: Determine whether the first execution flow information is the same as the second execution flow information.

If the first execution flow information is the same as the second execution flow information, the service provider performs step 311a; or if the first execution flow information is different from the second execution flow information, it indicates that the first control command is not a valid command initiated by the user, and the service provider performs step 311b.

Step 311a: The service provider sends the first control command to an execution device.

Step 311b: The service provider determines that the verification on the first control command fails.

Step 312: The execution device executes the first control command.

Step 313a: The service provider prompts the user with alarm information.

Step 313b: The service provider sends the alarm information to the service invoker, so that the service invoker prompts the user with the alarm information.

In this embodiment, step 311a, step 311b, step 312, step 313a, and step 313b are similar to step 208a, step 208b, step 209, step 210a, and step 210b in the embodiment corresponding to FIG. 2A and FIG. 2B. For details, refer to the related descriptions in the steps in the embodiment corresponding to FIG. 2A and FIG. 2B. Details are not described herein.

In this embodiment, the service invoker can generate the first control command based on the first behavior information, obtain the first execution flow information generated in the process of generating the first control command, and then send the first behavior information and the first execution flow information to the service provider as the verification information of the first control command, so that the service provider performs verification on the first control command based on the first behavior information and the first execution flow information. Therefore, this helps improve security of invoking the vehicle body control service.

In addition, the verification information that is received by the service provider and that is used to perform verification on the first control command includes the first behavior information and the first execution flow information. The service provider determines, based on the first mapping rule and the first behavior information, the second execution flow information corresponding to the first behavior information in the first mapping rule. When the first execution flow information is the same as the second execution flow information, the service provider determines that the first control command is valid, and triggers sending of the first control command to the execution device. The service provider can determine, based on the first behavior information, that the first control command is triggered by the user, and can determine, based on the first execution flow information, that the first control command is not tampered with. Therefore, this helps improve security of invoking the vehicle body control service.

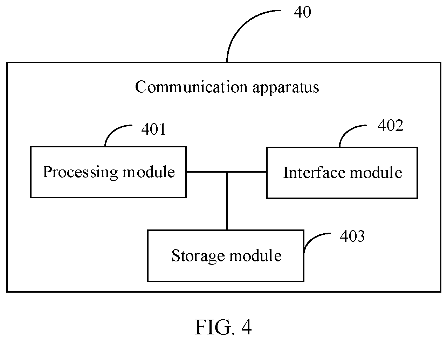

As shown in FIG. 4, this application provides a communication apparatus 40. The communication apparatus 40 may be a service invoker, or may be a component (for example, an integrated circuit or a chip) in the service invoker. The communication apparatus 40 may be a service provider, or may be a component (for example, an integrated circuit or a chip) in the service provider. The communication apparatus 40 may alternatively be another communication module configured to implement the method in the method embodiments of this application.

The communication apparatus 40 may include a processing module 401 (or referred to as a processing unit). Optionally, the communication apparatus 40 may further include an interface module 402 (or referred to as a transceiver unit or a transceiver module) and a storage module 403 (or referred to as a storage unit). The interface module 402 is configured to communicate with another device. For example, the interface module 402 may be a transceiver module or an input/output module.

In a possible design, one or more modules in FIG. 4 may be implemented by one or more processors, implemented by one or more processors and storages, implemented by one or more processors and transceivers, or implemented by one or more processors, storages, and transceivers. This is not limited in embodiments of this application. The processor, the storage, and the transceiver may be disposed separately, or may be integrated. When the communication apparatus 40 is configured to implement a function of the service invoker, for an architecture of the processing module 401 in the communication apparatus 40, refer to the example shown in FIG. 1C or FIG. 1D.

In a design, the communication apparatus 40 can implement the function of the service invoker in the embodiment corresponding to FIG. 2A and FIG. 2B or FIG. 3A and FIG. 3B. For example, the communication apparatus 40 includes a module, a unit, or a means (means) corresponding to the service invoker performing the steps related to the service invoker described in embodiments of this application. The function, the unit, or the means (means) may be implemented by software or hardware, may be implemented by hardware executing corresponding software, or may be implemented by a combination of software and hardware. For example, the interface module 402 in the communication apparatus 40 is configured to receive a first control command and verification information of the first control command from the service invoker, where the first control command is used to invoke a first service, the verification information of the first control command is used to perform verification on the first control command, the verification information of the first control command includes first behavior information, and the first behavior information indicates behavior of a user in triggering generation of the first control command. The processing module 401 is configured to: perform verification on the first control command based on the verification information of the first control command; and if the verification on the first control command succeeds, control the interface module 402 to send the first control command to an execution device, where the execution device is configured to execute the first control command.

In a possible implementation, the processing module 401 is specifically configured to: determine, based on the first behavior information and a first mapping rule, a second control command corresponding to the first behavior information, where the first mapping rule includes at least one type of behavior information and a control command corresponding to each type of behavior information; and if the first control command is the same as the second control command, determine that the verification on the first control command succeeds.

In a possible implementation, the verification information of the first control command further includes first execution flow information, the first execution flow information indicates process information for invoking the first service, and the first mapping rule further includes execution flow information of each service. The processing module 401 is specifically configured to: if the first control command is the same as the second control command, determine, based on the second control command and the first mapping rule, second execution flow information corresponding to the second control command; and if the first execution flow information is the same as the second execution flow information, determine that the verification on the first control command succeeds. Optionally, the first execution flow information is an execution flow for invoking the first service or a hash value of an execution flow for invoking the first service.

In a possible implementation, the first behavior information includes first coordinates, the first coordinates are coordinates corresponding to an operation of the user, and each of the at least one type of behavior information in the first mapping rule includes at least one coordinate area. The processing module 401 is specifically configured to: determine a coordinate area in which the first coordinates are located; and determine, according to the first mapping rule, that a control command corresponding to the coordinate area in which the first coordinates are located is the second control command.

In a possible implementation, the first behavior information includes first semantic information, the first semantic information is semantics generated based on a voice instruction input by the user, and each of the at least one type of behavior information in the first mapping rule includes one piece of semantic information. The processing module 401 is specifically configured to determine, according to the first mapping rule, that a control command corresponding to the first semantic information is the second control command.

In a possible implementation, the first behavior information includes first time information, and the first time information is time at which the service invoker detects the behavior of the user in triggering the generation of the first control command. The processing module 401 is specifically configured to: if the service provider determines that a difference between a moment indicated by the first time information and a current moment exceeds the first threshold, determine that the verification on the first control command fails.

In a possible implementation, the verification information of the first control command is signed by the service invoker. The processing module 401 is further configured to: perform verification on a signature of the verification information of the first control command; and if the verification on the signature of the verification information of the first control command succeeds, determine, based on the first behavior information and the first mapping rule, the second control command corresponding to the first behavior information.

In a possible implementation, the processing module 401 is further configured to: if the verification performed by the service provider on the signature of the verification information of the first control command fails, determine that the verification on the first control command fails.

In a possible implementation, the processing module 401 is further configured to: if the first control command is different from the second control command, determine that the verification on the first control command fails.

In a possible implementation, the processing module 401 is further configured to: if the first execution flow information is different from the second execution flow information, determine that the verification on the first control command fails.

In a possible implementation, the processing module 401 is further configured to: if it is determined that the verification on the first control command fails, control the input/output module to prompt the user with alarm information, where the alarm information indicates that the verification on the first control command fails; or the processing module 401 is further configured to: if it is determined that the verification on the first control command fails, control the transceiver module 402 to send alarm information to the service invoker, where the service invoker is used to prompt the user with the alarm information.

It should be noted that, for a specific implementation and beneficial effect of this embodiment, refer to the method performed by the service provider in the foregoing embodiment. Details are not described herein again.

In a design, the communication apparatus 40 is configured to perform the method performed by the service invoker in the embodiment corresponding to FIG. 2A and FIG. 2B or FIG. 3A and FIG. 3B. The processing module 401 in the communication apparatus 40 is configured to: obtain first behavior information, where the first behavior information indicates behavior of a user in triggering generation of a first control command; and generate the first control command based on the first behavior information, where the first control command is used to invoke a first service. The interface module 402 is configured to send the first control command and verification information of the first control command, where the verification information of the first control command includes the first behavior information, and the verification information of the first control command is used to perform verification on the first control command.

In a possible implementation, the processing module 401 includes a trusted module. The trusted module in the communication apparatus obtains the first behavior information, where permission of the trusted module is higher than permission of a kernel in the service invoker. Optionally, a running environment of the trusted module and a running environment of the kernel are independent of each other. Optionally, the trusted module has read permission and write permission on a storage module, the kernel has no access permission on the storage module, and the storage module is configured to store the first behavior information.

In a possible implementation, the processing module 401 is further configured to obtain first execution flow information, where the first execution flow information indicates process information for invoking the first service. Optionally, the first execution flow information is an execution flow for invoking the first service or a hash value of an execution flow for invoking the first service.

In a possible implementation, the trusted module in the communication apparatus obtains the first execution flow information.

In a possible implementation, the verification information of the first control command is signed by the service invoker. The processing module 401 is further configured to perform signature processing on the verification information of the first control command by using a key.

In a possible implementation, the first behavior information includes first coordinates, and the first coordinates are coordinates corresponding to an operation of the user; or the first behavior information includes first semantic information, and the first semantic information is semantics generated based on a voice instruction input by the user.

In a possible implementation, the first behavior information includes first time information, and the first time information is time at which the service invoker detects the behavior of the user in triggering the generation of the first control command.

In a possible implementation, the trusted module includes at least one of the following: a virtual machine monitor, a trusted kernel, or a trusted execution environment TEE.

It should be noted that, for a specific implementation and beneficial effect of this embodiment, refer to the method performed by the service invoker in the foregoing embodiment. Details are not described herein again.

In addition, this application provides a computer program product. The computer program product includes one or more computer instructions. When the computer program instructions are loaded and executed on a computer, the procedures or functions according to embodiments of this application are all or partially generated. For example, the method related to the service invoker in FIG. 2A and FIG. 2B or FIG. 3A and FIG. 3B is implemented. For another example, the method related to the service provider in FIG. 2A and FIG. 2B or FIG. 3A and FIG. 3B is implemented. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state drive, SSD)), or the like.

In addition, this application further provides a computer-readable storage medium. The storage medium stores a computer program, and the computer program is executed by a processor to implement the method related to the service invoker in FIG. 2A and FIG. 2B or FIG. 3A and FIG. 3B.

In addition, this application further provides a computer-readable storage medium. The storage medium stores a computer program, and the computer program is executed by a processor to implement the method related to the service provider in FIG. 2A and FIG. 2B or FIG. 3A and FIG. 3B.

In addition, this application further provides a service invoking system. The service invoking system includes the service provider in the embodiment corresponding to FIG. 2A and FIG. 2B or FIG. 3A and FIG. 3B and the service invoker in the embodiment corresponding to FIG. 2A and FIG. 2B or FIG. 3A and FIG. 3B.

In addition, this application further provides a vehicle. The vehicle includes the service provider in the embodiment corresponding to FIG. 2A and FIG. 2B or FIG. 3A and FIG. 3B and the service invoker in the embodiment corresponding to FIG. 2A and FIG. 2B or FIG. 3A and FIG. 3B. In addition, the vehicle further includes an execution device. In addition, the vehicle further includes a human-machine interaction external device like a touchscreen or a microphone.

It should be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

A person skilled in the art may clearly understand that, for convenient and brief description, for a detailed working process of the foregoing system, apparatus, and unit, refer to a corresponding process in the foregoing method embodiments. Details are not described herein again.

## Claims

1. A service invoking method, comprising:
receiving, by a service provider, a first control command and verification information of the first control command from a service invoker, wherein the first control command is used to invoke a first service, the verification information of the first control command is used to perform verification on the first control command, the verification information of the first control command comprises first behavior information, and the first behavior information indicates behavior of a user in triggering generation of the first control command;
performing, by the service provider, verification on the first control command based on the verification information of the first control command; and
if the verification on the first control command succeeds, sending, by the service provider, the first control command to an execution device, wherein the execution device is configured to execute the first control command.

2. The method according to claim 1, wherein performing, by the service provider, verification on the first control command based on the verification information of the first control command comprises:
determining, by the service provider based on the first behavior information and a first mapping rule, a second control command corresponding to the first behavior information, wherein the first mapping rule comprises at least one type of behavior information and a control command corresponding to each type of behavior information; and
if the first control command is the same as the second control command, determining, by the service provider, that the verification on the first control command succeeds.

3. The method according to claim 2, wherein the verification information of the first control command further comprises first execution flow information, the first execution flow information indicates process information for invoking the first service, and the first mapping rule further comprises execution flow information for invoking each service; and
the method further comprises:
if the first control command is the same as the second control command, determining, by the service provider based on the second control command and the first mapping rule, second execution flow information corresponding to the second control command, wherein the second execution flow information indicates process information for invoking a second service; and
determining, by the service provider, that the verification on the first control command succeeds comprises:
if the first execution flow information is the same as the second execution flow information, determining, by the service provider, that the verification on the first control command succeeds.

4. The method according to claim 3, wherein the first execution flow information is an execution flow for invoking the first service or a hash value of an execution flow for invoking the first service.

5. The method according to any one of claims 2 to 4, wherein the first behavior information comprises first coordinates, the first coordinates are coordinates corresponding to an operation of the user, and each of the at least one type of behavior information in the first mapping rule comprises at least one coordinate area; and
determining, by the service provider based on the first behavior information and the first mapping rule, the second control command corresponding to the first behavior information comprises:
determining, by the service provider, a coordinate area in which the first coordinates are located; and
determining, by the service provider according to the first mapping rule, that a control command corresponding to the coordinate area in which the first coordinates are located is the second control command.

6. The method according to any one of claims 2 to 4, wherein the first behavior information comprises first semantic information, the first semantic information is semantics generated based on a voice instruction input by the user, and each of the at least one type of behavior information in the first mapping rule comprises one piece of semantic information; and
determining, by the service provider based on the first behavior information and the first mapping rule, the second control command corresponding to the first behavior information comprises:
determining, by the service provider according to the first mapping rule, that a control command corresponding to the first semantic information is the second control command.

7. The method according to any one of claims 2 to 6, wherein the first behavior information comprises first time information, and the first time information is time at which the service invoker detects the behavior of the user in triggering the generation of the first control command; and
the method further comprises:
if the service provider determines that a difference between a moment indicated by the first time information and a current moment exceeds the first threshold, determining, by the service provider, that the verification on the first control command fails.

8. The method according to any one of claims 2 to 7, wherein the verification information of the first control command is signed by the service invoker; and
before determining, by the service provider based on the first behavior information and the first mapping rule, the second control command corresponding to the first behavior information, the method further comprises:
performing, by the service provider, verification on a signature of the verification information of the first control command; and
determining, by the service provider based on the first behavior information and the first mapping rule, the second control command corresponding to the first behavior information comprises:
if the verification performed by the service provider on the signature of the verification information of the first control command succeeds, determining, by the service provider based on the first behavior information and the first mapping rule, the second control command corresponding to the first behavior information.

9. The method according to claim 8, wherein the method further comprises:
if the verification performed by the service provider on the signature of the verification information of the first control command fails, determining, by the service provider, that the verification on the first control command fails.

10. The method according to claim 2, wherein the method further comprises:
if the first control command is different from the second control command, determining, by the service provider, that the verification on the first control command fails.

11. The method according to claim 3, wherein the method further comprises:
if the first execution flow information is different from the second execution flow information, determining, by the service provider, that the verification on the first control command fails.

12. The method according to claim 7, 9, 10, or 11, wherein the method further comprises:
if the service provider determines that the verification on the first control command fails, prompting, by the service provider, the user with alarm information, wherein the alarm information indicates that the verification on the first control command fails; or
if the service provider determines that the verification on the first control command fails, sending, by the service provider, alarm information to the service invoker, wherein the service invoker is used to prompt the user with the alarm information.

13. The method according to any one of claims 3 to 12, wherein the first execution flow information is obtained by a trusted module in the service invoker.

14. A service invoking method, comprising:
obtaining, by a service invoker, first behavior information, wherein the first behavior information indicates behavior of a user in triggering generation of a first control command;
generating, by the service invoker, the first control command based on the first behavior information, wherein the first control command is used to invoke a first service; and
sending, by the service invoker, the first control command and verification information of the first control command, wherein the verification information of the first control command comprises the first behavior information, and the verification information of the first control command is used to perform verification on the first control command.

15. The method according to claim 14, wherein obtaining, by the service invoker, the first behavior information comprises:
obtaining, by a trusted module in the service invoker, the first behavior information, wherein permission of the trusted module is higher than permission of a kernel in the service invoker.

16. The method according to claim 15, wherein a running environment of the trusted module and a running environment of the kernel are independent of each other.

17. The method according to claim 15 or 16, wherein the trusted module has read permission and write permission on a storage module, the kernel has no access permission on the storage module, and the storage module is configured to store the first behavior information.

18. The method according to any one of claims 14 to 17, wherein before sending, by the service invoker, the first control command and the verification information of the first control command to the service provider, the method further comprises:
obtaining, by the service invoker, first execution flow information, wherein the first execution flow information indicates process information for invoking the first service.

19. The method according to claim 18, wherein the first execution flow information is an execution flow for invoking the first service or a hash value of an execution flow for invoking the first service.

20. The method according to claim 18 or 19, wherein obtaining, by the service invoker, the first execution flow information comprises:
obtaining, by the trusted module in the service invoker, the first execution flow information.

21. The method according to any one of claims 14 to 20, wherein the verification information of the first control command is signed by the service invoker; and
before sending, by the service invoker, the first control command and the verification information of the first control command to the service provider, the method further comprises:
performing, by the service invoker, signature processing on the verification information of the first control command by using a key.

22. The method according to any one of claims 14 to 21, wherein the first behavior information comprises first coordinates, and the first coordinates are coordinates corresponding to an operation of the user; or
the first behavior information comprises first semantic information, and the first semantic information is semantics generated based on a voice instruction input by the user.

23. The method according to claim 22, wherein the first behavior information comprises first time information, and the first time information is time at which the service invoker detects the behavior of the user in triggering the generation of the first control command.

24. The method according to any one of claims 15 to 23, wherein the trusted module comprises at least one of the following:
a virtual machine monitor, a trusted kernel, or a trusted execution environment TEE.

25. A communication apparatus, comprising a processor and a storage, wherein
the storage stores a computer program; and
the processor invokes the computer program, to enable the communication apparatus to perform the method according to any one of claims 1 to 13.

26. A communication apparatus, comprising a processing unit and a storage unit, wherein
the storage unit stores a computer program; and
the processing unit invokes the computer program, to enable the communication apparatus to perform the method according to any one of claims 14 to 24.

27. A service invoking system, comprising:
the communication apparatus according to claim 25 and the communication apparatus according to claim 26.

28. A vehicle, comprising:
the communication apparatus according to claim 25 and the communication apparatus according to claim 26.

29. A computer-readable storage medium, storing instructions, wherein when the instructions are run on a computer, the computer is enabled to perform the method according to any one of claims 1 to 13, or the method according to any one of claims 14 to 24.

30. A computer program product, storing instructions, wherein when the instructions are run on a computer, the computer is enabled to perform the method according to any one of claims 1 to 13, or the method according to any one of claims 14 to 24.
